(19) Europäisches Patentamt
European Patent Office
Office européen des brevets

(11) EP 2 202 723 B1

(12) **FASCICULE DE BREVET EUROPEEN**

(45) Date de publication et mention
de la délivrance du brevet:
**25.01.2017 Bulletin 2017/04**

(21) Numéro de dépôt: **09180424.5**

(22) Date de dépôt: **22.12.2009**

(51) Int Cl.:
***G10L 17/00*** *(2013.01)*

(54) **Procédé et système pour authentifier un locuteur**

Verfahren und System zur Authentifizierung einem Sprecher

Method and system for speaker authentication

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **23.12.2008 FR 0807408**

(43) Date de publication de la demande:
**30.06.2010 Bulletin 2010/26**

(73) Titulaire: **Thales
92400 Courbevoie (FR)**

(72) Inventeurs:
• **Capman, François
92700, COLOMBES (FR)**
• **Marcello, Sandra
92700, COLOMBES (FR)**
• **Martinelli, Jean
92700, COLOMBES (FR)**

(74) Mandataire: **Dudouit, Isabelle et al
Marks & Clerk France
Conseils en Propriété Industrielle
Immeuble " Visium "
22, avenue Aristide Briand
94117 Arcueil Cedex (FR)**

(56) Documents cités:
• **MONROSE F; REITER M K; QI LI; WETZEL S ED
- INSTITUTE OF ELECTRICAL AND
ELECTRONICS ENGINEERS: "Cryptographic key
generation from voice" PROCEEDINGS OF THE
2001 IEEE SYMPOSIUM ON SECURITY AND
PRIVACY. S&P 2001. OAKLAND, CA, MAY 14 - 16,
2001; 20010514; 20010514 - 20010516 LOS
ALAMITOS, CA : IEEE COMP. SOC, US, 14 mai
2001 (2001-05-14), pages 202-213, XP010543218**
• **PAOLA GARCÍA-PERERA L; JUANA
NOLAZCO-FLORES; CARLOS MEX-PERERA ED
- MARCOS FAUNDEZ-ZANUY; LÉONARD
JANER; ANNA ESPOSITO; ANTONIO S:
"Parameter Optimization in a Text-Dependent
Cryptographic-Speech-Key Generation Task" 1
janvier 2006 (2006-01-01), NONLINEAR
ANALYSES AND ALGORITHMS FOR SPEECH
PROCESSING LECTURE NOTES IN COMPUTER
SCIENCE;LECTURE NOTES IN ARTIFICIAL
INTELLIG ENCE;LNCS, SPRINGER, BERLIN, DE,
PAGE(S) 92 - 99 , XP019027589 * le document en
entier ***

**Description**

L'objet de la présente invention concerne un procédé et un système permettant d'authentifier un utilisateur, et éventuellement générer une donnée cryptographique, telle qu'une clé cryptographique, associée à un locuteur. Elle trouve son application dans l'authentification avec précision d'un locuteur sans stockage de données caractérisant ce locuteur.

L'invention trouve son application pour la génération de clés de chiffrement ou cryptographiques. Elle s'applique dans tout système de reconnaissance dans lequel les données biométriques utilisées pour la reconnaissance peuvent se mettre sous la forme de vecteurs qui seront transformés en données binaires.

Dans la description les définitions et paramètres suivants seront utilisés.

Le terme cepstre est un type de vecteur représentatif du contenu spectral extrait d'un signal de parole ou d'un signal audio, basé sur une hypothèse de production du signal de type source-filtre. Les centroïdes sont des vecteurs représentatifs d'une classe de vecteurs cepstraux. L'ensemble de ces centroïdes constituent un dictionnaire obtenu par exemple en mettant en oeuvre un algorithme d'apprentissage connu de l'Homme du métier, des exemples d'algorithme seront donnés dans la suite de la description.

Les phonèmes correspondent à des unités linguistiques qui permettent de décrire les sons (transcription phonétique des mots dans un dictionnaire). Une réalisation acoustique d'un phonème est un phone, et correspond donc à un son physique (un même phonème sera donc prononcé différemment au cours du temps par un même locuteur, variabilité intra-locuteur, il est donc possible d'associer un ensemble de réalisations phones à un même phonème). D'un point de vue pratique, ceci se traduit par un extraction d'une séquence de cepstre du signal acoustique et donc à un phone correspond une séquence de cepstres. Entre deux locuteurs, les différences entre les réalisations d'un même phonème seront plus importantes (variabilité inter-locuteur). Les phonèmes sont aussi prononcés différemment en fonction du contexte (i.e en fonction du phonème qui précède et du phonème qui suit). Le mot « allophone » est généralement utilisé pour décrire une classe de phones correspondant à une même variante d'un phonème (même contexte). Ces connaissances sont en général utilisées pour construire des modèles statistiques associés à chaque phonème, si possible en tenant compte des contextes, dans les systèmes de reconnaissance vocale.

Le document de Paola Garcia-Perrera L, et al, intitulé « Parameter Optimization in a Text-Dependent Cryptographic-speech-Key-Generation Task », 1 janvier 2006, Nonlinear Analyses and algorithms for Speech Processing Lecture Notes in computer Science ; Lecture Notes in Artificial Intelligence, LNCS, Springer, Berlin, de pages 92-99, XP019027589 ISBN :978-3-540-31257-4, utilise des modèles du type décrit ci-dessus.

La publication de Monrose intitulé « Cryptographic Key Generation from Voice », concerne une technique pour générer de manière fiable une clé de cryptographie pour une voix d'utilisateur. Les clés sont suffisamment robustes contre des attaques.

Le document de Paola Garcia-Perera intitulé « Parameter Optimization in a Text-Dependent Cryptographic-Speech-Key-Generation Task » divulgue un procédé permettant de générer des clés en optimisant le nombre de paramètres.

De nos jours, les systèmes de reconnaissance ou d'authentification utilisant des paramètres biométriques sont très utilisés. De tous les types de biométrie, la technique de reconnaissance du locuteur est la mieux acceptée par l'utilisateur, car elle n'est pas intrusive et n'exige aucun contact avec le lecteur du système. Il en est de même pour les systèmes d'authentification basés sur la reconnaissance de l'iris. D'autre part, la reconnaissance du locuteur est particulièrement adaptée aux applications mises en oeuvre sur des réseaux de communications phonie, permettant un traitement distant et centralisé sur un serveur. La variabilité de la voix entre différents individus vient de trois facteurs distincts ; des différences morphologiques, des différences physiologiques, ou encore des différences socioculturelles. Le premier de ces facteurs se modifie au cours de l'adolescence mais se stabilise. Les autres facteurs ne sont pas stables et peuvent varier dans le temps. Ces facteurs ajoutés aux distorsions de bruit environnant et à la qualité du dispositif de reconnaissance vocale, ou d'enregistrement de la voix justifient de grandes variations intra-locuteurs. Ceci augmente la difficulté de reconnaître un individu lors de son authentification.

Malgré ces facteurs limitant la bonne utilisation, il existe un grand nombre d'applications pour lesquelles une authentification par le biais de la voix est la plus indiquée. Par exemple, il est possible de mentionner l'utilisation de la reconnaissance vocale dans les téléphones portables, les services associés, comme par exemple, la consultation de données bancaires, etc., ceci en toute sécurité, sans avoir peur qu'un individu malintentionné parvienne à récupérer des données caractérisant cet individu. (L'utilisation de données biométriques imposant une forte contrainte sur la présence physique de l'utilisateur est plus robuste que la seule utilisation d'un mot de passe).

Il existe actuellement un besoin de système permettant une authentification précise du locuteur sans stockage de données susceptibles de trahir son identité ou d'informations relevant de sa vie privée.

L'article de Monrose et al intitulé « Cryptographic Key Generation from Voice », paru dans les Proceedings of the 2001 IEEE Symposum on Security and Privacy Mai 2001, décrit un système permettant de générer une clef cryptographique à partir de la voix d'un individu. S'il s'avère efficace, ce système présente néanmoins comme inconvénient de nécessiter l'utilisation d'une base de données dans laquelle des informations caractérisant le locuteur peuvent être stockées.

En résumé, au cours de sa mise en oeuvre, le procédé va utiliser les étapes suivantes :

- Une première étape va permettre la configuration du système de reconnaissance. Elle est indépendante des utilisateurs et comportera le choix de locuteurs de référence, le choix des paramètres du système (configuration) et la construction d'un dictionnaire de référence qui sera stocké dans le système de reconnaissance selon l'invention. Lors de cette étape un super-vecteur moyen est également constitué. Cette première étape peut être effectuée en amont du procédé, dans ce cas, le procédé va utiliser le résultat de cette étape.
- Une deuxième étape est une étape d'apprentissage ou d'enrôlement des différents utilisateurs ou locuteurs I ; au cours de cette étape d'apprentissage, le procédé va générer une donnée publique Kpub(l) pour un locuteur I (qui sera aussi désignée comme clef publique) associée à la séquence vocale d'apprentissage d'un locuteur I. Cette donnée publique ne permet pas à elle seule de reconstruire le signal vocal initial.
- Une troisième étape est une étape d'utilisation du système pour la reconnaissance, l'authentification d'un individu et/ou la génération d'une clé cryptographique associée à un individu ; un nouveau dictionnaire est construit cette fois-ci à partir de la séquence vocale de test du locuteur à reconnaître ou à authentifier et le procédé applique un extracteur flou connu de l'Homme du métier, dont un exemple est donné dans la publication de Y. Dodis, L. Rezin et A Smith intitulée « Fuzzy extractors : how to generate strong keys from biometrics and other noisy data » Eurocrypt 2004 LNCS 3027 p.79-100 Springer-Verlag 2004, ou Y. Dodis, R. Ostrovski, L. Rezin and A Smith SIAM Journal of computing 38 (1) 97-139 2008) ou une méthode ayant la même fonctionalité qui prend également en entrée la donnée publique Kpub(l) associée au locuteur construite lors de la phase d'enrôlement et les données binaires construites à partir de la séquence test. L'extracteur flou a notamment pour fonction de reconnaître ou d'authentifier le locuteur et de générer une clé cryptographique ou encore une donnée secrète associée à ce locuteur s'il a été bien reconnu, authentifié. Si seule la reconnaissance du locuteur ou son authentification est désirée, une méthode de type « secure sketch » connue de l'Homme du métier sera utilisée.

Les notations suivantes seront utilisées pour l'exemple de reconnaissance vocale:

L, le nombre de locuteurs de référence, utilisés pour la construction du dictionnaire de référence,
P la taille des vecteurs issus de la synthèse vocale,
Nr, le nombre total de vecteurs cepstraux pour l'ensemble des locuteurs de référence,
Nc, le nombre de centroïdes du dictionnaire de référence, et des dictionnaires générés à partir des séquences de parole des locuteurs à identifier (locuteurs tests),
M, le nombre total de vecteurs cepstraux pour le locuteur de test.

De même, les définitions suivantes seront utilisées. La concaténation des vecteurs d'un même dictionnaire constituera un super-vecteur. C'est le super-vecteur construit à partir du dictionnaire du locuteur à authentifier qui va être binarisé. Le terme de super-vecteur sera utilisé pour couvrir à la fois un dictionnaire obtenu par l'approche de quantification vectorielle ou par modélisation GMM détaillées dans la suite.

Les dictionnaires, et donc les super-vecteurs associés sont ordonnés : chaque centroïde est censé être représentatif d'une même zone de l'espace acoustique quelque soit le locuteur. Cette propriété est obtenue par construction.

La méthode selon la présente invention telle que revendiquée dans les revendications 1 et 4, est une méthode simple permettant de construire un dictionnaire associé à un locuteur sans a priori sur la segmentation phonétique. Le travail s'effectue directement sur les cepstres extraits d'une séquence de parole associée à un locuteur. Une telle méthode, ne nécessite donc pas en fonctionnement normal d'avoir des modèles, et requière uniquement les séquences d'apprentissage pour les différents locuteurs.

L'invention concerne un système d'authentification audio d'un individu ou locuteur I caractérisé en ce qu'il comporte en combinaison au moins les éléments suivants :

- Un capteur d'un ou plusieurs paramètres audio associés audit individu,
- Un module d'extraction des paramètres acoustiques à partir du signal audio,
- Un modèle moyen associé à un super-vecteur moyen **M** représentatif de la population à authentifier,
- Une base de données de référence,
- Une base de données contenant les clés publiques Kpub(l) des individus à authentifier ;
- Un processeur adapté :

  o à élaborer un dictionnaire de référence représentatif d'un individu en utilisant les vecteurs les vecteurs cepstraux issus des séquences de parole de L locuteurs de référence par transformations successives hiérarchiques et en regroupant les vecteurs cepstraux afin d'établir par construction hiérarchique un dictionnaire de référence, le dictionnaire Dref se présentant sous la forme d'un ensemble de composantes correspondant aux vecteurs cepstraux ou super-vecteur et élaborer un super-vecteur moyen en utilisant la moyenne par composantes des différents vecteurs constituant le super-vecteur moyen,

o à élaborer pour chaque locuteur un dictionnaire Dloc en utilisant le dictionnaire Dref,

o à décomposer un signal audio reçu sur le capteur en vecteurs représentatifs du locuteur I à authentifier, à transformer le super-vecteur $V$ dudit locuteur I issu de la concaténation des vecteurs associés audit locuteur I en données binaires 1001100 ....0 en prenant en entrée le super-vecteur moyen $M$ issu du modèle moyen, et en comparant le super-vecteur $V$ du locuteur et le super-vecteur moyen $M$,

o lesdites données binaires ainsi obtenues étant transmises à un module d'extraction de l'authentification du locuteur prenant en entrée les clés publiques Kpub(I) afin d'authentifier le locuteur et/ou de générer une donnée cryptographique associée audit locuteur I,

o le signal audio est un signal de parole et en ce que ledit processeur est adapté à transformer les signaux de parole en vecteurs cepstraux, et en ce que

o le processeur est adapté à déterminer les centroïdes associés aux vecteurs cepstraux d'un locuteur et à exécuter la transformation des centroïdes en données binaires en utilisant au moins un un bit significatif en exécutant les étapes suivantes :

o comparer le super-vecteur du locuteur $V = (v_i)_{i=0,\cdots L-1}$ avec le super-vecteur moyen $M = (m_i)_{i=0,\ldots L-1}$

o pondérer chaque centroïde ci en fonction du nombre de vecteurs extraits du signal de parole associé.

Les données sont, par exemple, des signaux de parole, et ledit processeur est adapté à transformer lesdits signaux de parole en paramètres acoustiques, tels que des cepstres, des LSF, des formants.

L'invention concerne aussi un procédé d'authentification audio d'un individu caractérisé en ce qu'il comporte en combinaison au moins les étapes suivantes :

- élaborer un dictionnaire de référence représentatif d'un individu en utilisant les vecteurs cepstraux issus des séquences de parole de L locuteurs de référence par transformations successives hiérarchiques et en regroupant les vecteurs cepstraux afin d'établir par construction hiérarchique un dictionnaire de référence, le dictionnaire Dref se présentant sous la forme d'un ensemble de composantes correspondant aux vecteurs cepstraux ou super-vecteur et élaborer un super-vecteur moyen en utilisant la moyenne par composantes des différents vecteurs constituant le super-vecteur moyen,
- élaborer pour chaque locuteur un dictionnaire Dloc en utilisant le dictionnaire Dref et en associant les vecteurs du dictionnaire du locuteur $Dl_{oc}$ et ceux du dictionnaire de référence Dref,
- capter un signal audio représentatif d'un locuteur à authentifier et extraire des paramètres acoustiques à partir du signal audio,
- définir un super-vecteur moyen $M$ représentatif de la population à authentifier, issu d'un modèle moyen,
- déterminer les clés publiques Kpub(I) des individus susceptibles d'être authentifiés par le procédé,

  o décomposer le signal audio reçu en vecteurs représentatifs du locuteur I à authentifier, transformer le super-vecteur dudit locuteur I issu de la concaténation des vecteurs associés audit locuteur en données binaires 1001100 ....0 en prenant en entrée le super-vecteur moyen $M$ issu du modèle moyen, et en comparant le super-vecteur du locuteur et le super-vecteur moyen,

  o lesdites données binaires ainsi obtenues étant transmises à un module d'extraction de l'authentification du locuteur prenant en entrée les clés publiques Kpub(I) afin d'authentifier le locuteur et/ou de générer une donnée cryptographique associée audit locuteur I.

D'autres caractéristiques et avantages de la présente invention apparaîtront mieux à la lecture d'un exemple non limitatif de réalisation en se référant aux figures qui représentent :

- La figure 1, un exemple de système selon l'invention,
- La figure 2, les étapes mises en oeuvre pour la construction d'un dictionnaire de référence pour l'initialisation du système selon l'invention,
- La figure 3, les étapes exécutées pour la construction d'un dictionnaire ou super-vecteur associé à un locuteur, et
- Les figures 4A, 4B et 4C, une représentation de la pondération des centroïdes, dits légers ou lourds.

De manière à mieux faire comprendre le principe de fonctionnement du procédé et du système selon l'invention, la description qui suit est donnée pour une application de reconnaissance et d'authentification vocale d'un individu. Il sera aussi décrit comment générer une clé cryptographique associée à un individu.

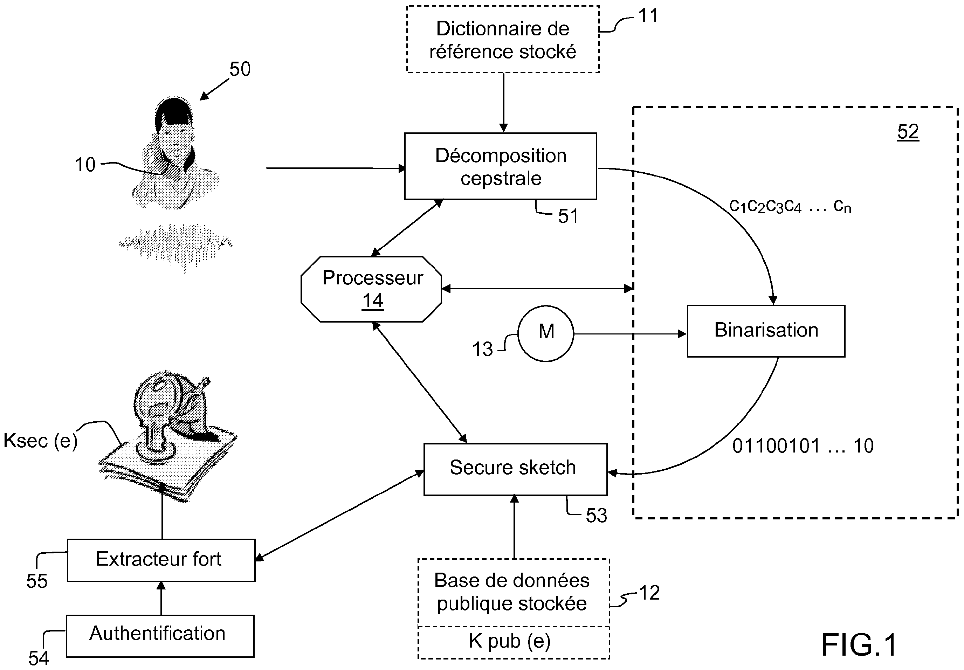

En résumé pour mettre en oeuvre le procédé selon l'invention, un système de reconnaissance schématisé à la figure 1 comprend au moins les éléments suivants :

- Un capteur 10 permettant l'acquisition du signal de parole provenant du locuteur à authentifier,
- Une base de données 11, correspondant à un dictionnaire de référence, qui peut être, dans certains modes de réalisation, construit en dehors du système. Ce dictionnaire comprend les super-vecteurs caractéristiques d'une population de L locuteurs. Cette base de données 11 va servir pour configurer le système. Cette configuration peut se faire en usine, par exemple.
- Une base de données 12 contenant les différentes données publiques générées pour chaque locuteur lors de la phase d'enrôlement, cette base de données est mémorisée dans le système dans le cas d'un fonctionnement normal du système de reconnaissance selon l'invention. Ces données sont nécessaires pour retrouver l'identité du locuteur mais ne trahissent aucune information sur celui-ci.
- Un super-vecteur moyen 13 qui peut être déterminé à partir des L locuteurs ou en tenant compte d'une autre population L'; il y a plusieurs façons de construire le super-vecteur moyen. Il est toutefois préférable d'utiliser tous les locuteurs de référence pour construire un modèle moyen et un super-vecteur moyen, par opposition à un super-vecteur moyen obtenu à partir des utilisateurs de système, qui nécessite la disponibilité des données correspondantes pour pouvoir initialiser le système.
- Un processeur 14 adapté à exécuter les étapes du procédé selon l'invention qui vont être explicitées ci-après. Les étapes comportent notamment la transformation des données initialement sous forme de vecteurs en données binaires, ces données binaires étant soumises à un extracteur flou composé par exemple de la donnée d'un « secure sketch » et d'un extracteur fort, ayant notamment pour fonction d'identifier l'individu correspondant, en tenant compte du modèle moyen élaboré et des données publiques ; le processeur est adapté à exécuter notamment les modules suivants : un module d'extraction 51 permettant l'extraction de paramètres acoustiques (comme l'analyse cepstrale par exemple, généralement utilisée en reconnaissance du locuteur) du signal de parole, un module de binarisation 52 ayant pour fonction de transformer un vecteur associé à un locuteur en données binaires, un module 53 connu sous l'acronyme de « secure sketch » qui permet l'authentification d'un individu et un module 54 ou « extracteur fort », tel qu'une fonction de hachage connue de l'Homme du métier qui permet la génération d'une clé secrète Ksec(l) associée à un locuteur l.

L'exemple de la fonction de hachage est donné à titre illustratif, toute fonction permettant la génération de clé publique pourra être utilisée.

Dans la suite de la description, la terminologie de dictionnaire sera utilisée pour l'approche par quantification vectorielle, la terminologie de modèle est employée pour la modélisation par Mélange de Gaussiennes ou « GMM ». Le terme de super-vecteur permet de couvrir de manière générique ces deux approches. Dans le premier cas, le super-vecteur correspond à la concaténation des vecteurs associés aux centroïdes du dictionnaire, et dans le second cas il s'agit de la concaténation des vecteurs associés aux moyennes de chaque Gaussienne multidimensionnelle.

Pour caractériser un locuteur l, on construit un modèle du locuteur qui peut prendre plusieurs formes selon le compromis performance/complexité recherché. La modélisation la plus utilisée en reconnaissance du locuteur est une modélisation statistique par Mélange de Gaussiennes (GMM, Gaussian Mixture Model) de la distribution des paramètres acoustiques extraits des séquences d'apprentissage. Les paramètres généralement utilisés sont les paramètres cepstraux qui sont représentatifs du conduit vocal. La construction d'un modèle de locuteur consiste donc à extraire des séquences de parole d'apprentissage les paramètres cepstraux et de modéliser leur distribution statistique par une modélisation GMM, par exemple.

La présente invention propose aussi de manière complémentaire à l'approche par modélisation GMM, une méthode plus simple basée sur les principes de quantification vectorielle, par exemple. La quantification vectorielle est aussi utilisée pour la reconnaissance de locuteurs, très souvent lorsque la quantité de données de parole disponibles est restreinte en durée. En effet contrairement au GMM qui requiert l'estimation de nombreux paramètres (moyennes, variances et poids associés à chaque Gaussienne), on se limite à l'estimation des moyennes.

La construction des dictionnaires va utiliser les paramètres et les vecteurs acoustiques (par exemple les cepstres) qui correspondent aux portions du signal contenant de la parole. La détection des zones de parole ou d'activité peut se faire selon plusieurs méthodes, connues de l'Homme du métier.

**Extraction des paramètres cepstraux**

De manière simplifiée, le système phonatoire d'un locuteur est modélisé par un système source-filtre. Ce modèle est très largement exploité en traitement de la parole (codage, reconnaissance de la parole, reconnaissance du locuteur ...). Le signal source est soit un bruit blanc pour les sons dits non voisés, soit un train d'impulsions périodiques pour les sons voisés. La période correspond à la fréquence de vibration des cordes vocales (pitch, fréquence fondamentale). Ce signal source ou d'excitation est passé à travers un filtre qui représente le conduit vocal et qui est propre au locuteur. D'autre part, la forme du conduit vocal est associée aux différents sons produits par le locuteur. Une bonne modélisation du locuteur requiert donc, si possible, des séquences d'apprentissages qui vont incorporer l'ensemble des sons et donc couvrir au mieux l'espace acoustique du locuteur. L'extraction des paramètres cepstraux consiste à séparer les contributions dues au signal d'excitation et au conduit vocal par une opération de déconvolution homomorphique.

Le signal de parole qui peut être décrit comme le signal résultant de la convolution du signal d'excitation par le filtre associé au conduit vocal, est transformé dans le domaine de Fourier par analyse court-terme sur des fenêtres glissantes. En général, l'analyse se fait approximativement toutes les 10 ms (durée de quasi-stationnarité du signal de parole) et sur des fenêtres d'analyse de 20 ms environ. Ces valeurs sont aussi valables pour d'autres types d'analyse (extraction de coefficients LPC ou LSF par exemple). Dans le domaine de Fourier le signal de parole est alors représenté par un produit terme à terme (de même fréquence) des composantes du signal d'excitation et du filtre. En appliquant le logarithme au module de la transformée de Fourier du signal, il est alors possible d'obtenir une représentation du signal de parole par sommation de la contribution du signal d'excitation et de celle du conduit vocal. Afin de séparer les deux contributions, le spectre logarithmique ainsi obtenu est transformé dans un domaine pseudo-temporel, le domaine cepstral par transformée de Fourier inverse. Dans ce domaine, les premiers coefficients sont représentatifs du conduit vocal (variations lentes du spectre logarithmique) alors que les coefficients d'ordre élevé sont caractéristiques du signal d'excitation (variations rapides du spectre logarithmique). La séparation des deux contributions peut alors se faire de façon simple par une opération dite de « liftrage » qui consiste à ne conserver que les coefficients d'ordre faibles éventuellement avec une pondération associée.

*Signal de parole s(n) = convolution du signal d'excitation e(n) par le filtre h(n)*

$$s(n) = h(n) * e(n)$$

*Signal de parole dans le domaine de Fourier*

$$S(z) = H(z) \times E(z)$$

*Spectre logarithmique*

$$\log[S(z)] = \log[H(z)] + \log[E(z)]$$

*Cepstre obtenu par transformée de Fourier inverse*

$$c_S(k) = c_H(k) + c_E(k)$$

*Cepstre estimé du conduit vocal à partir d'un liftrage*

$$\hat{c}_H(k) = L(k) \times c_S(k)$$

*Liftre standard :*

$$L(k) = 1 \text{ pour } k <= Ncep$$

$$L(k) = 0 \text{ pour } k > Ncep$$

Ordre de grandeur Ncep = 13 à 18

Le premier coefficient cesptral d'indice 0 est homogène à l'énergie du signal et n'est donc pas discriminant du point de vue locuteur. Par contre ses dérivées (généralement du premier et du second ordre) sont porteuses d'information et peuvent être incorporées aux vecteurs acoustiques utilisés dans l'invention. D'un point de vue pratique, il existe plusieurs variantes pour l'extraction des paramètres cepstraux obtenus, soit par souci de réduction de complexité, soit par prise en compte de critères perceptuels, ou encore par l'utilisation d'autres méthodes d'analyse du signal. On citera de façon non exhaustive les principaux types de paramètres cepstraux suivants :

- Cepstres réels obtenus par transformée de Fourier. Il s'agit du processus d'extraction correspondant à l'opération de déconvolution homomorphique décrite précédemment et réalisé à partir des opérateurs de transformée de Fourier.
- Cepstres obtenus par transformée en cosinus inverse appliquée au spectre logarithmique obtenu après passage dans un banc de filtres. Si le banc de filtres est linéaire en fréquence, on parle de **LFCC** (Linear Frequency Cepstrum Coefficients). Si le banc de filtres est non linéaire l'appellation va dépendre de l'échelle non-linéaire utilisée (échelle de Bark, échelle de Mel, échelle paramétrique...). L'échelle non linéaire la plus communément utilisée est l'échelle de Mel coonue de l'Homme du métier et les coefficients obtenus sont les coefficients de cesptres de fréquence ou « **MFCC** » (Mel Frequency Cepstrum Coefficients) connus de l'Homme du métier.
- Cesptres obtenus par conversion des coefficients de prédiction linéaire obtenus par une analyse de type LPC (algorithme de Levinson-Durbin par exemple). On parle dans ce cas de LPCC (Linear Prediction Cepstrum Coefficients). Il est aussi possible d'utiliser une échelle non linéaire des fréquences par filtrage (filtres déphaseurs) du signal de parole avant analyse par prédiction linéaire.

Il s'agit ici des principaux types de paramètres cepstraux. Il est aussi intéressant de citer les paramètres PLP (Perceptual Linear Prediction) utilisés en reconnaissance de la parole et les paramètres cepstraux correspondants, ainsi que les paramètres LSF (Line Spectral Frequencies) utilisés dans le domaine du codage de la parole.

De manière plus générale, la plupart des paramètres spectraux peuvent être utilisés pour caractériser le locuteur du point de vue du conduit vocal.

Pour améliorer les performances, il est fréquent d'ajouter une information temporelle obtenue en ajoutant aux paramètres cepstraux leurs dérivées temporelles du premier ordre (Delta-cesptres par exemple) et du second ordre (Delta-delta-cepstres par exemple).

Enfin, il est possible d'ajouter des paramètres caractéristiques de la prosodie (distribution statistique et trajectoire du pitch et de l'énergie) pour améliorer encore les performances, et des paramètres plus directement représentatifs du conduit vocal comme les formants (fréquences de résonance du conduit vocal).

L'extraction des paramètres est d'autre part, en général, associée à une détection d'activité vocale ou à un critère de sélection (énergie, voisement ...) afin de ne pas prendre en compte des vecteurs associés au bruit.

**Construction du modèle GMM**

Un modèle GMM correspond à une somme pondérée de N Gaussiennes multidimensionnelles dont la dimension est égale à celle des paramètres dont on cherche à modéliser la distribution. L'algorithme utilisé pour l'apprentissage d'un modèle GMM à partir de l'ensemble des vecteurs d'entrée est l'algorithme EM (Expectation-Maximisation) connu de l'Homme du métier. Le nombre de Gaussiennes utilisées pour les systèmes de vérification du locuteur est en général compris entre 256 et 2048. Il y a donc 3N paramètres à estimer (moyennes, variances et poids associés).

La quantité de paramètres à estimer étant considérable, la construction d'un modèle GMM d'un locuteur se fait le plus souvent en deux étapes :

1. Apprentissage d'un modèle GMM global (dit modèle du monde) obtenu à partir d'un grand nombre de locuteurs et de données (si possible représentatives de l'application visée, et prenant notamment en compte le canal acoustique et le canal de transmission)

2. Construction du modèle du locuteur par adaptation du modèle global. Afin de limiter la durée nécessaire lors de la phase d'apprentissage et pour obtenir un modèle robuste du locuteur, celui-ci est obtenu par transformation du modèle global à partir d'un ensemble plus petit que celui qui serait nécessaire avec un apprentissage direct. L'algorithme d'adaptation du modèle global le plus communément utilisé est l'algorithme MAP (Maximum A Posteriori) connu de l'Homme du métier.

Dans le cadre de la présente invention, la quantité de données nécessaires pour réaliser l'apprentissage est une contrainte importante pour les applications visées. En effet, l'utilisateur souhaite bien évidemment réduire au maximum la durée d'apprentissage. D'autre part, la complexité de la solution mise en oeuvre est aussi liée au nombre de paramètres considéré.

Le procédé selon l'invention propose donc aussi une alternative au modèle GMM, basé sur un modèle plus simple en se restreignant à la construction d'un dictionnaire de vecteurs moyens. Si il est possible de conserver le même processus d'apprentissage que pour un modèle GMM et ne considérer au final que les moyennes des Gaussiennes, la prise en compte de nombreux paramètres lors de la phase d'apprentissage requiert une quantité importante de données de parole. Une solution possible consiste alors à modifier aussi la phase d'apprentissage. En reprenant le principe d'un dictionnaire appris sur plusieurs locuteurs et sans contrainte particulière de durée, et en se basant sur un algorithme d'adaptation proposé par S.Furui, dans son article intitulé « unserpervised speaker adaptation based on hierarchical spectral clustering, IEEE Transations on acoustics, speech and signal processing vol 37 N° 12 décembre 1989, l'idée de l'invention est de proposer un schéma de construction simplifié d'un dictionnaire représentatif du locuteur.

De la même façon que pour les modèles GMM, le procédé va procéder en deux étapes :

Une première étape consiste à construire le dictionnaire de référence (dictionnaire global) à partir de données sélectionnées au préalable à partir de corpus de parole provenant de plusieurs locuteurs. Ce dictionnaire sera utilisé pour configurer le système. Il est en effet pertinent d'utiliser des données proches des conditions d'utilisation envisagées du système :

locuteurs de même langue, système d'acquisition du signal de parole identique ou similaire, contenu phonétique riche et équilibré. Le nombre L de locuteurs de référence est indépendant du nombre d'utilisateurs du système, et la construction du dictionnaire de référence ne nécessite aucune information propre aux utilisateurs. De meilleures performances seront obtenues en augmentant la quantité de données et de locuteurs afin d'améliorer la couverture de l'espace acoustique des locuteurs. Dans le cas de la modélisation par GMM, on parle de modèle du monde ou universel.

Une deuxième étape consiste à utiliser les données d'apprentissage du locuteur que l'on cherche à modéliser pour construire le dictionnaire de ce locuteur à partir du dictionnaire de référence. Ce dictionnaire va être utilisé lors de la phase d'apprentissage du système d'authentification et aussi lors de la phase d'utilisation pour la reconnaissance d'un individu. Une première séquence vocale d'apprentissage va permettre de générer un premier dictionnaire du locuteur qui n'est pas conservé dans le système mais qui va servir ultérieurement à générer la donnée publique Kpub(l) mémorisée pour chaque locuteur l.

Construction du dictionnaire de référence $D_{ref}$

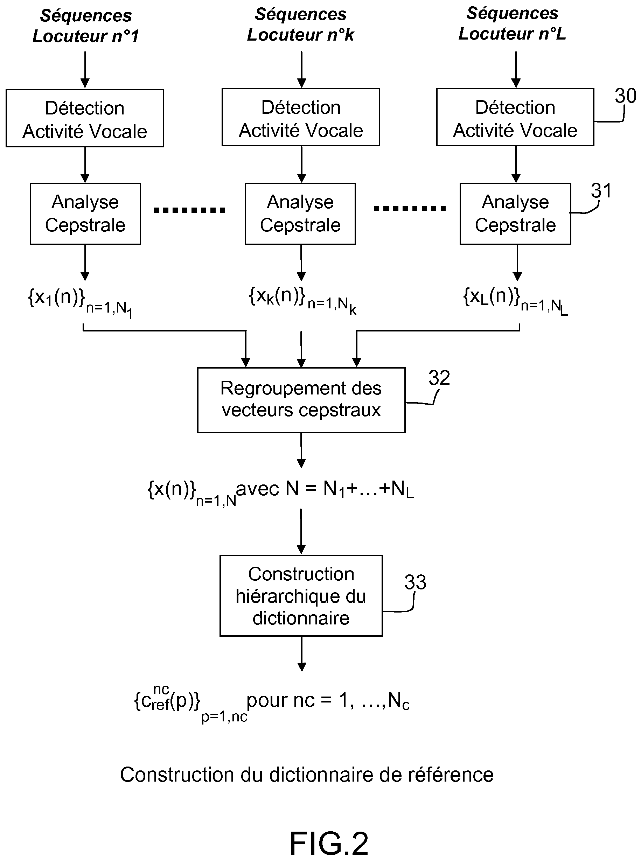

La figure 2 schématise les différentes étapes mises en oeuvre pour construire le dictionnaire de référence Dref. Une première étape consiste donc à partir d'un ensemble El de vecteurs représentatifs de plusieurs locuteurs Lref à construire un dictionnaire de N vecteurs représentatif des El vecteurs. Il existe de nombreux algorithmes permettant d'atteindre cet objectif. De façon non limitative, une manière de procéder, en général, consiste à minimiser un critère de distorsion calculé comme la somme des distances de chacun des El vecteurs au vecteur qui lui est le plus proche parmi les N vecteurs du dictionnaire. Il s'agit donc dans un premier temps de réaliser une opération de classification : chacun des El vecteurs est associé à un des N vecteurs du dictionnaire par minimisation d'un critère de distance (distance entre vecteurs cepstraux), puis dans un deuxième temps de cumuler les distances entre les vecteurs ainsi associés. La distance cumulée donne alors la distorsion du dictionnaire sur l'ensemble des données. Un algorithme possible de minimisation de ce critère est l'algorithme des K-moyennes (K-Means) qui procède par itérations successives à partir d'un ensemble initial de N vecteurs du dictionnaire. Les itérations consistent d'abord à classifier chacun des El vecteurs, puis à ré-estimer les N nouveaux vecteurs du dictionnaire comme étant les vecteurs moyens (ou centroïdes) de chacune des classes. Ces opérations sont répétées un certain nombre de fois déterminé au préalable ou de manière automatique en utilisant un critère d'arrêt (évolution de la distorsion inférieure à un seuil). Cet algorithme permet donc d'optimiser en termes de distorsion un dictionnaire de taille fixe.

Une manière simple d'initialiser le processus est de procéder de façon incrémentale. Le processus commence alors par estimer le vecteur moyen sur l'ensemble des données. La taille du dictionnaire est alors augmentée de manière incrémentale en divisant un des vecteurs du dictionnaire en deux par ajout d'une composante de perturbation différente. Après chaque augmentation du nombre de vecteurs du dictionnaire un algorithme du type des K-moyennes est utilisé pour optimiser le dictionnaire. Lorsque l'on divise un des vecteurs du dictionnaire, plusieurs approches sont possibles pour sélectionner le vecteur à diviser. Une méthode exhaustive consiste à faire plusieurs essais avec différents vecteurs et à retenir le choix qui minimise au final la distorsion du dictionnaire. Cette approche est coûteuse en temps de calcul mais permet d'explorer les différentes possibilités. Une autre approche consiste à sélectionner un des vecteurs en utilisant des critères simples basés par exemple : sur le cardinal de la classe (division de la classe la plus peuplée), sur des critères de variance intra-classe, ou des critères combinés. Une approche plus simple consiste à doubler à chaque itération le nombre de vecteurs du dictionnaire et donc à s'affranchir de la sélection des vecteurs à diviser. A la fin de cette première étape, on obtient donc une suite de dictionnaires optimisés pour toutes les tailles intermédiaires jusqu'à la taille N finale du dictionnaire de référence. Il s'agit d'une structuration hiérarchique.

La figure 2 représente le déroulement des étapes précitées mises en oeuvre pour la construction d'un dictionnaire de référence à partir de Lref locuteurs. Cette étape est une étape de configuration du système qui peut être exécutée en dehors du système. Ces différentes étapes correspondent aux étapes référencées 30, 31 sur la figure 2 où l'on détecte 30 l'activité vocale pour L locuteurs 1 ,... ...L, dans cet exemple un seul ensemble est formé. L'activité vocale de chacun des locuteurs est transmise à une analyse cepstrale 31, qui suit la démarche décrite ci-dessus. L'analyse cepstrale conduit pour chacun des locuteurs à un ensemble de vecteurs cepstraux ayant plusieurs composantes $xi(n)_{i=1,Ni}$. Ces différents vecteurs sont regroupés 32 en un vecteur global $\{x(n)\}_{n=1,..N}$ avec $N=N_1+....+N_L$, utilisé pour une construction hiérarchique d'un dictionnaire de référence 33 ou super-vecteur résultant de la concaténation des centroïdes. Le dictionnaire se présente sous la forme d'un ensemble de composantes $\{c^j_{ref}(p)\}p=1, P$ (P = taille des vecteurs acoustiques) pour j=1,...,K ou super-vecteur.

Lors de cette étape un modèle moyen ou super-vecteur moyen est aussi constitué. Ce modèle moyen peut être obtenu soit à partir des locuteurs ayant été choisi pour générer le dictionnaire de référence, ou encore par L' locuteurs censés représenter la moyenne des locuteurs éventuels. Le super-vecteur moyen est déterminé d'une manière identique à celle mise en oeuvre pour construire le super-vecteur de référence, en ajoutant une étape au cours de laquelle, on va effectuer la moyenne par composantes des différents vecteurs constituant le super-vecteur moyen.

Une deuxième étape mise en oeuvre par le procédé selon l'invention est l'étape d'apprentissage ou d'enrôlement des différents utilisateurs. Elle va consister à construire un dictionnaire pour un ou plusieurs locuteurs l qui va être utilisé lors de la phase d'apprentissage du système ou encore lors de l'utilisation du système pour générer une donnée publique Kpub(l) qui sera mémorisée dans la base de données 12. Cette clé publique sera appelée par le processeur pour reconnaître un locuteur lors de la phase de reconnaissance d'un locuteur.

La deuxième étape consiste donc à construire un dictionnaire de N vecteurs représentatifs des données d'apprentissage d'un locuteur en utilisant la structuration hiérarchique obtenue précédemment. Le principe consiste à projeter les données associées à un locuteur de manière successive dans l'espace de référence, espace fourni par le dictionnaire de référence Dref. Cette opération de projection se fait en associant les vecteurs du dictionnaire du locuteur $Dl_{oc}$ et ceux du dictionnaire de référence Dref (par classification), à calculer des vecteurs de déviation entre paires de vecteurs associés et à utiliser ces vecteurs de déviation pour projeter les données sur l'espace de référence. Chaque vecteur de données utilise un vecteur de déviation obtenu par pondération des vecteurs de déviation associé à chaque vecteur du dictionnaire. La pondération utilisée tient compte de la distance entre le vecteur considéré et chacun des vecteurs du dictionnaire, et permet d'introduire une contrainte de continuité des données après projection. Le poids associé à chaque vecteur de déviation est selon S. Furui l'inverse de la distance (élevée à la puissance alpha) entre le vecteur considéré et le vecteur du dictionnaire. La déviation associée au vecteur du dictionnaire le plus proche sera donc prédominante.

Le processus s'initialise de manière simple, puisqu'il s'agit de calculer le vecteur moyen global et de translater l'ensemble des données en utilisant le vecteur de déviation égal à la différence entre le vecteur de référence moyen (dictionnaire de taille 1) et le vecteur moyen des données du locuteur. Le processus se poursuit en augmentant de manière incrémentale la taille du dictionnaire $D_{loc}$ du locuteur en suivant la structuration hiérarchique du dictionnaire de référence. On classifie les données alignées du locuteur avec le dictionnaire de référence de taille supérieure, on calcule les vecteurs moyens associés à chaque classe ainsi considérée, on en déduit les vecteurs de déviation, puis on aligne les données. On répète ce processus jusqu'à obtenir le dictionnaire de taille N voulue.

Ce processus ne requiert à aucun moment de stocker des données relatives au locuteur, puisque ce processus de construction du dictionnaire $D_{loc}$ du locuteur par adaptation se fait lors de l'utilisation du système à partir de la séquence de parole de test.

Seules les données publiques ou clés publiques Kpub(l) correspondant à un locuteur l seront stockées dans le système, dans la base de données12.

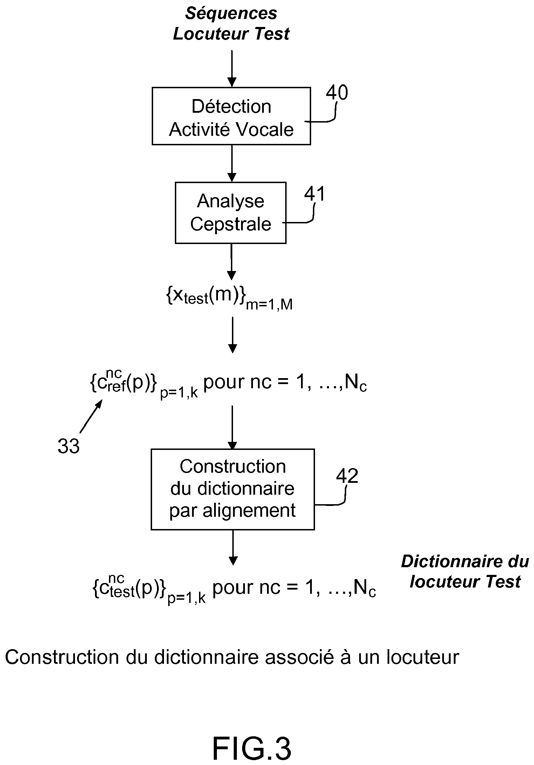

La figure 3 représente les différentes étapes mises en oeuvre pour la construction d'un dictionnaire pour un locuteur test, ou de manière plus générale pour un locuteur qui va utiliser par la suite le système de reconnaissance vocale selon l'invention.

Tout d'abord, la voix du locuteur va être captée par un capteur approprié, suivi d'un module de détection d'activité vocale 40, puis les données vont être transmises à une analyse cepstrale 41, qui fournit un ensemble de vecteurs $\{X_{test}(m)\}_{m=1,..M}$ avant d'être transmises à une étape de construction du dictionnaire 42, qui utilise le dictionnaire 33 construit pour les données de référence (voir figure 2) $\{c^{nc}_{ref}(p)\}p=1, P$ pour nc=1,....,Nc..

La construction des différents dictionnaires fait appel à des méthodes détaillées ci-après.

**Algorithme des K Moyennes (K-Means) - Algorithme de Lloyd**

*1. Initialisation : choix ne centroïdes*

• Plusieurs approches sont possibles : tirage aléatoire parmi l'ensemble des vecteurs d'entrée, échantillonnage temporel, centroïdes résultant d'une autre procédure d'estimation ...

*2. Classification de l'ensemble des vecteurs d'entrées*

- Chaque vecteur est affecté au centroïde le plus proche
- L'ensemble des vecteurs affectés à un même centroïde forme une classe

*3. Mise à jour des nc centroïdes*

- Chaque centroïde est recalculé à partir des vecteurs de la classe correspondante

*4. Calcul de la distorsion totale*

- La distorsion totale est définie comme la somme des distorsions de chaque classe
- La distorsion d'une classe est définie comme la somme des distances au centroïde de l'ensemble des vecteurs affectés à cette classe

*5. Critère d'arrêt*

- Si la distorsion totale varie moins de T %, alors on sauvegarde le dictionnaire des centroïdes obtenus
- Sinon on retourne à l'étape 2)

**Algorithme incrémental de construction du dictionnaire. Cet algorithme est utilisé pour la construction du dictionnaire de référence Dref (figure 2).**

*1. Initialisation pour nc = 1*

- On calcule le vecteur moyen à partir de l'ensemble des vecteurs d'entrées

*2. Sélection de la classe à subdiviser*

- Selon un critère prédéfini, on sélectionne la classe à subdiviser
- Le critère peut être plus ou moins élaboré : subdivision de la classe la plus large, subdivision de la classe avec la plus grande variance, subdivision de la classe qui permet la meilleure convergence d'un algorithme Nc-Means au sens de la distorsion totale ...

*3. Subdivision de la classe sélectionnée, nc =nc + 1*

- Le centroïde de la classe sélectionnée est donc remplacé par deux nouveaux centroïdes,
- Les nouveaux centroïdes peuvent être obtenus de plusieurs façons : en général on applique une perturbation au centroïde d'origine,

$$c_1 = (1 + \varepsilon) \times c_0$$

$$c_2 = (1 - \varepsilon) \times c_0$$

Une méthode plus optimale consiste à perturber le centroïde selon l'axe principal (extraction du vecteur propre de valeur propre maximale).

### 4. Optimisation du dictionnaire de taille nc

- Les nc centroïdes sont optimisés en utilisant un algorithme du type K-Means.

### 5. Critère d'arrêt

- Si le nombre $N_c$ de centroïdes souhaité est atteint, ou si la distorsion totale est au-dessous d'un seuil prédéfini, on sauvegarde le dictionnaire obtenu
- Sinon on retourne à l'étape 2)

**Une autre possibilité consiste à utiliser un Algorithme par éclatement binaire de construction du dictionnaire**

### 1. Initialisation pour nc = 1

- On calcule le vecteur moyen à partir de l'ensemble des vecteurs d'entrées

### 2. Subdivision de l'ensemble des classes nc = 2 * nc

- Chaque centroïde est donc remplacé par deux nouveaux centroïdes
- Les nouveaux centroïdes peuvent être obtenues de plusieurs façons : en général on applique une perturbation au centroïde d'origine

$$c_1 = (1 + \varepsilon) \times c_0$$

$$c_2 = (1 - \varepsilon) \times c_0$$

Une méthode plus optimale consiste à perturber le centroïde selon l'axe principal (extraction du vecteur propre de valeur propre maximale)

### 3. Optimisation du dictionnaire de taille nc

- Les nc centroïdes sont optimisés en utilisant un algorithme du type K-Means

### 4. Critère d'arrêt

- Si le nombre Nc de centroïdes souhaité est atteint, ou si la distorsion totale est au-dessous d'un seuil prédéfini, on sauvegarde le dictionnaire obtenu

- Sinon on retourne à l'étape 2)

Pour construire le dictionnaire d'un locuteur une manière de procéder décrite à la figure 3 consiste à mettre en oeuvre le principe de l'algorithme proposé par S. Furui précité

### 1. Construction hiérarchique d'un dictionnaire de référence

- On utilise les vecteurs extraits des séquences de parole de L locuteurs de référence pour construire ce dictionnaire, 40
- L'algorithme utilisé est du type incrémental ou par éclatement binaire, permettant une structuration hiérarchique des dictionnaires pour nc=1,..., Nc (incrémental) ou pour nc=1, 2, 4,..., Nc (binaire), 41
- On utilise le terme de dictionnaire de référence pour nommer l'ensemble de ces dictionnaires (de taille intermédiaire), 43
- Ce dictionnaire est calculé une fois en fonction de la configuration choisie (type de vecteurs, taille des vecteurs, taille des dictionnaires, nombre de locuteurs de référence, séquences d'apprentissage associées aux locuteurs de référence...)

### 2. Extraction des vecteurs du locuteur à représenter (locuteur test ou client)

- On utilise le même schéma d'extraction de vecteurs que pour l'obtention du dictionnaire de référence (les données doivent être homogènes)

### 3. Calcul du vecteur moyen des données de test (nc = 1)

### 4. Calcul du vecteur de déviation (nc = 1)

- Le vecteur de déviation entre deux classes associées est défini comme la différence entre le centroïde de référence et le centroïde de test

### 5. Alignement des vecteurs de test

- Tous les vecteurs sont alors translatés selon le vecteur de déviation précédemment calculé
- La correspondance des vecteurs translatés et les vecteurs d'origine est mémorisée
- Les vecteurs de test se trouvent donc alignés en moyenne avec les données de référence

### 6. Classification des vecteurs de test (nc = nc + 1, ou nc = 2 *nck)

- Chaque vecteur de test est affecté à un centroïde du dictionnaire de référence d'ordre supérieur (nc = nc+1, ou nc = 2*nc)

### 7. Calcul des nc centroides du locuteur de test

- A partir de la classification obtenue précédemment, on calcule les nc centroïdes à partir des vecteurs du locuteur test
- Les nc centroïdes obtenus sont donc par construction mis en correspondance avec les nc centroïdes de référence

*8. Calcul des nc vecteurs de déviation*

- Pour chaque paire de centroïdes (référence, test) on calcule un vecteur de déviation défini comme la différence entre le centroïde de référence et le centroïde de test

*9. Alignement des vecteurs de test avec contrainte de continuité*

- Chaque vecteur de test est translaté selon un vecteur de déviation obtenu à partir d'une combinaison linéaire des vecteurs de déviation précédemment calculés
- Les coefficients de pondération de la combinaison linéaire sont calculés à partir de la distance entre le vecteur de test et chaque centroïde de test (chaque centroïde de test étant en correspondance avec un vecteur de déviation)
- Cette combinaison linéaire permet d'assurer une translation avec contrainte de continuité des vecteurs de tests
- La correspondance des vecteurs translatés et des vecteurs d'origine est mémorisée
- Description détaillée du processus de translation :

M est le nombre de vecteurs de la séquence du locuteur test Les M vecteurs de test (de taille P) sont notés

$$\mathbf{x}_{test}(m), \text{pour } m = 1, ..., M$$

Les P composantes des nc centroïdes du dictionnaire du locuteur de test, de taille intermédiaire k sont notés :

$$c_{test}^{i}(p), \text{pour } p = 1, ..., P \text{ et pour } i = 1, ..., nc$$

Les P composantes des nc centroïdes du dictionnaire de référence, de taille intermédiaire k sont notés :

$$c_{ref}^{i}(p), \text{pour } p = 1, ..., P \text{ et pour } i = 1, ..., nc$$

Les P composantes des nc vecteurs de déviation associés sont notés :

$$D^{i}(p) = c_{ref}^{i}(p) - c_{test}^{i}(p), \text{pour } p = 1, ..., P \text{ et pour } i = 1, ..., nc$$

Le vecteur de déviation appliqué au vecteur de test d'indice m est obtenu par combinaison linéaire des vecteurs de déviation précédents :

$$\mathbf{d}_{test}^{k}(m) = \sum_{i=1}^{k} \alpha^{k}(i) \times \mathbf{D}^{i}, \text{pour } m = 1, ..., M$$

Les coefficients de pondération de la combinaison linéaire des k vecteurs de déviation sont donnés par :

$$\alpha^{k}(i) = \frac{w^{k}(i)}{\sum_{i=1}^{k} w^{k}(i)}, \text{pour } i = 1, ..., nc, \quad \text{avec } w^{k}(i) = \frac{1}{d(m,i)^{\gamma}}$$

et où les distances entre les M vecteurs de test (m=1,...,M) et les nc centroïdes de test (i=1,...,nc) sont obtenues de la façon suivante :

$$d(m,i) = \left\| \mathbf{x}_{test}(m), \mathbf{c}_{test}^{k}(i) \right\|, \text{ pour } m = 1, ..., M \text{ et } i = 1, ..., nc$$

*10. Critère d'arrêt*

- Le dictionnaire du locuteur de test est obtenu lorsque nc=Nc
- Sinon on retourne à l'étape 6)

Le mot test est indiqué comme indice pour désigner un locuteur de test (utilisateur du système) lors de la phase d'apprentissage du système ou encore lors de la phase d'authentification ou de reconnaissance.

Les dictionnaires de référence et d'un locuteur étant construits, le procédé va utiliser ces différentes informations lors de la phase d'authentification d'un locuteur en suivant les étapes déroulées à la figure 2, par exemple.

Les dictionnaires de références, et donc les super-vecteurs associés à ces dictionnaires, sont ordonnés ; chaque centroïde est censé être représentatif d'une même zone de l'espace acoustique quelque soit le locuteur. Cette propriété est obtenue par construction. La concaténation des vecteurs d'un même dictionnaire constitue un super-vecteur. C'est le super-vecteur construit à partir du dictionnaire du locuteur à authentifier qui va être binarisé.

Sur la figure 1 un individu 50 qui cherche à être authentifié par un système selon l'invention, va en parlant émettre un signal acoustique de parole enregistré par le capteur 10. La voix captée par le capteur 10 va ensuite être transmise au processeur 14 adapté pour effectuer une analyse spectrale 51 de ladite voix, afin de déterminer le super-vecteur associé au locuteur, le super-vecteur moyen **M,** 13, est ensuite utilisé pour binariser le super-vecteur représentatif du locuteur à reconnaître 52. Les données binaires 01100101...10 seront ensuite transmises à l'extracteur flou (53, 55) ou tout module ayant des fonctions identiques ou équivalentes permettant notamment la reconnaissance d'un individu et/ou la génération de clé secrète Ksec(l) pour un locuteur. L'extracteur flou est composé d'un « secure sketch » 53 et d'un extracteur fort dont les définitions sont connues de l'Homme du métier.

Lors de la phase d'apprentissage, la fonction de « secure sketch » va générer à partir des données binaires une clé publique Kpub(l) associée à un locuteur l. Lors de la phase de reconnaissance ou d'authentification, la fonction de « secure sketch » va utiliser les données binaires et les clés publiques stockées dans la base de données pour authentifier 55 ou non un locuteur.

L'extracteur fort 55 va lui générer une clé secrète ou clé de cryptographie associée à un locuteur l ou Ksec(l).

Lors d'une authentification vocale, on a extrait de la voix une suite de Nc vecteurs - appelés « centroïdes » - de P composantes réelles.

Le mode de réalisation décrit comme exemple illustratif de la présente invention est donné pour un individu appartenant à une population de N utilisateurs.

Cette suite de Nc vecteurs est traitée de façon à binariser les centroïdes afin de pouvoir utiliser ces données comme entrée pour un extracteur flou. On a donc un super-vecteur **V** représentatif du locuteur à authentifier de (P-1)Nc composantes réelles à transformer en données binaires ou binarisation (dans le cas des cepstres, les P composantes du vecteur cepstral excluent le premier coefficient cepstral relatif à l'énergie du signal). Pour l'étape de binarisation, le procédé va utiliser le "super-vecteur moyen" **M** ou « supervecteur moyen » dont chaque composante de ses K centroides est la moyenne (non pondérée) des composantes correspondantes des centroïdes dans les modèles des locuteurs de la population des utilisateurs ou d'une autre population choisie pour représenter une moyenne de la population de locuteurs. La binarisation se fait alors en comparant le super-vecteur du locuteur l, **V** obtenu par concaténation des Nc vecteurs $(v_i)_{i=1,...Nc}$ avec le super-vecteur moyen.

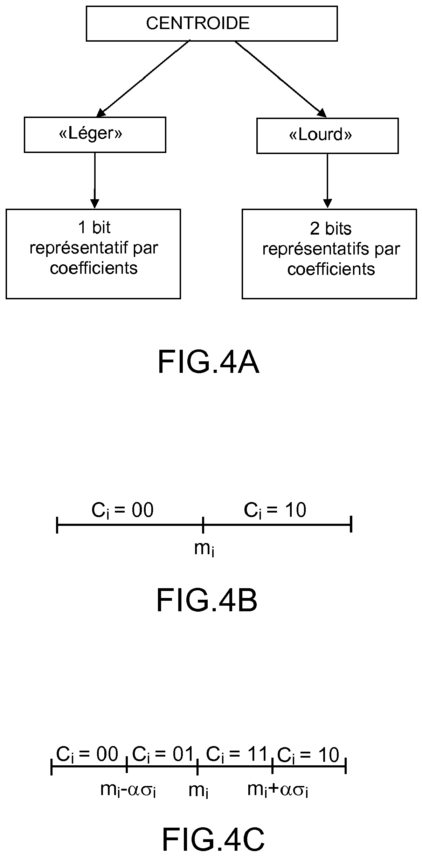

Afin d'affiner la représentation, dans un mode de réalisation, le procédé va pondérer chaque centroïde en fonction du nombre de vecteurs cepstraux de parole qui lui est associé afin d'effectuer l'étape de binarisation. Ceci est représenté aux figures 4A, 4B et 4C. Un centroïde « ci » pourra être dit « léger, auquel cas le procédé utilisera un bit représentatif par coefficient du centroïde ou encore dit lourd, dans ce cas, le procédé pourra utiliser 2 bits pour représenter un coefficient du centroïde.

Connaissant le nombre total de vecteurs cepstraux extraits de la séquence vocal, on calcule le nombre moyen de vecteurs cepstraux par centroïde. Pour chaque centroïde, on compare le nombre de vecteurs cepstraux qui s'y rattachent au suer-vecteur moyen **M** calculé précédemment. Si le nombre de vecteurs cepstraux rattaché au locuteur est supérieur au nombre moyen alors le centroïde ci est dit « lourd » sinon il est dit « léger » et le procédé va lui attribuer plus de bits que pour un centroïde dit « léger ».

L'un des objectifs en pratiquant ainsi est de donner plus d'importance aux centroïdes auxquels se rattachent le plus grand nombre de vecteurs de la séquence vocale. De cette façon, chaque composante est codée sur deux bits, dont un seul est significatif si le centroïde est « léger », alors que les deux le sont si le centroïde est « lourd », figures 4A et 4B.

Pour obtenir ce résultat le procédé va mettre en oeuvre deux méthodes de binarisation : une qui attribue un bit par coefficient (si le centroïde est léger), et une qui en attribue deux (si le centroïde est lourd) :

1. Soit un locuteur représenté par son vecteur $\mathbf{V} = (v_i)_{i=0,...L-1}$, et $\mathbf{M} = (m_i)_{i=0,...L-1}$ le super-vecteur moyen ordonné, on a la binarisation $b = (b_j)_{j=0,...2L-1}$ (à un bit significatif par coefficients) suivante :

$$b_{2i}b_{2i+1} = \begin{cases} 00 \text{ si } v_i \leq m_i \\ \\ 10 \text{ sinon} \end{cases}$$

2. On note $\sigma = (\sigma_i)_{i=0,...nc-1}$ la variance des différents coefficients (calculée sur tous les centroids de tous les locuteurs), nombre_vecteur le nombre de vecteurs total extraits de la séquence vocale, et n un paramètre permettant d'équilibrer la suite binaire b.

On a alors la binarisation $b = (b_i)_{i=0,...2l-1}$ (à deux bit significatifs par coefficients) suivante :

$$b_{2i}b_{2i+1} = \begin{cases} 00 \text{ si } \quad v_i \leq m_i - n * \sigma_{i \bmod (nc-1)} \\ 01 \text{ si } \quad m_i - n * \sigma_{i \bmod (nc-1)} < v_i \leq m_i \\ 10 \text{ si } \quad m_i < v_i \leq m_i + n * \sigma_{i \bmod (nc-1)} \\ 11 \text{ sinon} \end{cases}$$

De façon plus générale, il est possible de généraliser à n bits, l'étape de binarisation. Pour cela le procédé va segmenter l'espace des centroïdes en $2^n$ segments disjoints et en attribuant alors à chaque segment une valeur binaire unique comprise entre 0 et $2^n$. Une possibilité est de suivre un code de Gray (c'est-à-dire qu'il n'y a qu'un bit de différence entre deux segments adjacents). Vu les propriétés des extracteurs flous, en théorie, il n'est pas nécessaire que cette segmentation admettent des segments de même taille ou quelqu'autre propriété que celle citée ci-dessus. En prenant n=2, on retrouve la méthode détaillée de binarisation à 2 bits par coefficients avec un espace découpé en 4 segments.

Avec les notations précédentes, un exemple pour le pseudo-code suivant :

*Pseudo-code :*

• Pour i = 0 jusqu'à q faire

    o Récupérer le poids $p_i$ du centroïde
    o Si $p_i \leq 5$ nombre_vecteur / q faire

        ■ Pour j = 0 jusqu'à (nc-1) faire

            • $\propto = ((nc-1) * i) + j$

$$b_{2\propto}b_{2\propto+1} = \begin{cases} 00 \text{ si } v_i \leq m_i \\ 10 \text{ sinon} \end{cases}$$

    o Sinon

■ Pour j = 0 jusqu'à (nc-1) faire

• $\propto = ((nc-1) \, *i) + j$

$$\bullet \quad b_{2\propto}b_{2\propto+1} \;=\; \begin{cases} 00 \text{ si} & v_i \le m_i - n \,*\, \sigma_{i \bmod (nc-1)} \\ 01 \text{ si} & m_i - n \,*\, \sigma_{i \bmod (nc-1)} < v_i \le m_i \\ \\ 10 \text{ si} & m_i < v_i \le m_i + n \,*\, \sigma_{i \bmod (nc-1)} \\ 11 \text{ sinon} \end{cases}$$

Sortir $b = (b_j)_{j=0,\cdots 2l-1}$

Ces données de binarisation et la clé publique associée à un locuteur seront injectés dans le module de fonction de type secure sketch afin d'authentifier le locuteur l. Un exemple de « secure sketch » est la construction « code offset » qui produit une suite publique de longueur identique à la longueur de la suite binaire crée lors de la binarisation.

Soit Cod le code correcteur (n, k, d) où n est la longueur du code, k la dimension du code et d la distance minimale du code. Soit **V** le vecteur associé au locuteur après binarisation à authentifier et $\mu$ un mot du code, on a la construction suivante :

ss(**V**) = **V** xor $\mu$, on construit une suite publique Pub(l) = ss(**V**), les deux suites ayant des longueurs identiques.

Lors de l'étape d'enrôlement, la fonction secure sketch va permettre de déterminer la clé publique Kpub(l) associée au locuteur l qui sera mémorisée dans la base de données.

Lors de la phase de reconnaissance d'un locuteur en utilisant le super-vecteur construit lors de la phase de reconnaissance pour un locuteur l.

L'objectif est de retrouver le vecteur v associé au locuteur en utilisant un vecteur **V'** suffisamment proche de **V**. Le procédé ne mémorise ni **V,** ni le mot de code $\mu$. A partir du vecteur **V'** construit lors de la phase test et ss(**V**) on utilise la fonction recherche définie de la manière suivante :

$$\text{REC}(\mathbf{V'}, \text{ss}(\mathbf{V})) = \mathbf{V'} \text{ xor ss}(\mathbf{V}) = \mu'$$

$$\mu' = \mathbf{V'} \text{ xor } \mathbf{V} \text{ xor } \mu$$

Si l'erreur e est inférieure à la capacité de correction du code, alors le décodage de $\mu'$ donne $\mu$.

Puis appliquer la fonction ss(**V**) xor $\mu$ pour retrouver le vecteur **V** associé au locuteur l.

Le vecteur **V** sera utilisé pour générer une donnée secrète, par exemple, une clé cryptographique Ksec(l) pour le locuteur l. Sa génération peut se faire, par exemple, en utilisant une fonction de hachage connue de l'Homme du métier ou toute autre fonction similaire correspondant à la fonction d'extracteur fort.

Ces étapes sont mises en oeuvre, lors de la création des clés publiques pour permettant la génération de la base de données contenant les clés publiques.

La solution proposée par l'invention offre notamment comme avantage d'offrir un bon compromis pour ce scénario d'utilisation dans lequel la quantité de données parole peut être restreinte. Elle reste efficace dans le cas d'une reconnaissance ou authentification du locuteur indépendante du texte. Le proposé selon l'invention permet aussi de construire une donnée secrète associée à un locuteur. Elle présente de plus l'avantage de ne stocker aucune donnée pouvant permettre de retrouver des caractéristiques de la voix d'une personne. Elle s'applique dans de nombreux domaines, comme la sécurisation d'applications logicielles ou de services, dans le domaine des télécommunications, des transactions à distance, de contrôle d'accès à des données/services.

Le modèle GMM qui nécessite plus de données pour un apprentissage robuste, permet cependant une estimation conjointe des moyennes, poids et variances. Le processus de binarisation peut s'appliquer au modèle GMM de la même façon.

**Revendications**

1. Système d'authentification audio d'un individu ou locuteur I **caractérisé en ce qu'**il comporte en combinaison au moins les éléments suivants :

   • Un capteur (10) d'un ou plusieurs paramètres audio associés audit individu,
   • Un module d'extraction (51) des paramètres acoustiques à partir du signal audio,
   • Un modèle moyen associé à un super-vecteur moyen **M** (13) représentatif de la population à authentifier,
   • Une base de données de référence (11),
   • Une base de données (12) contenant les clés publiques Kpub(I) des individus à authentifier ;
   • Un processeur (14) adapté :

   o à élaborer un dictionnaire de référence représentatif d'un individu en utilisant les vecteurs cepstraux issus des séquences de parole de L locuteurs de référence par transformations successives hiérarchiques et en regroupant les vecteurs cepstraux afin d'établir par construction hiérarchique un dictionnaire de référence, le dictionnaire Dref se présentant sous la forme d'un ensemble de composantes correspondant aux vecteurs cepstraux ou super-vecteur et élaborer un super-vecteur moyen en utilisant la moyenne par composantes des différents vecteurs constituant le super-vecteur moyen,
   o à élaborer pour chaque locuteur un dictionnaire Dloc en utilisant le dictionnaire Dref,
   o à décomposer un signal audio reçu sur le capteur en vecteurs représentatifs du locuteur I à authentifier, à transformer le super-vecteur **V** dudit locuteur I issu de la concaténation des vecteurs associés audit locuteur I en données binaires 1001100 ....0 en prenant en entrée le super-vecteur moyen **M** issu du modèle moyen, et en comparant le super-vecteur **V** du locuteur et le super-vecteur moyen **M,**
   o lesdites données binaires ainsi obtenues étant transmises à un module d'extraction de l'authentification du locuteur prenant en entrée les clés publiques Kpub(I) afin d'authentifier le locuteur et/ou de générer une donnée cryptographique Ksec(I) associée audit locuteur I,
   o le signal audio est un signal de parole et **en ce que** ledit processeur est adapté à transformer les signaux de parole en vecteurs cepstraux, et **en ce que**
   o le processeur est adapté à déterminer les centroïdes associés aux vecteurs cepstraux d'un locuteur et à exécuter la transformation des centroïdes en données binaires en utilisant au moins un bit significatif en exécutant les étapes suivantes :

   o comparer le super-vecteur du locuteur $V = (v_i)_{i=0,...L-1}$ avec le super-vecteur moyen $M = (m_i)_{i=0,...L-1}$
   o pondérer chaque centroïde $C_i$ en fonction du nombre de vecteurs extraits du signal de parole associé.

2. Système selon la revendication 1 **caractérisé en ce que** les données sont des signaux de parole, et **en ce que** ledit processeur (14) est adapté à transformer lesdits signaux de parole en paramètres acoustiques, tels que des cepstres, des LSF, des formants.

3. Système selon la revendication 1 **caractérisé en ce que** le processeur (14) est adapté à transformer les coordonnées du super-vecteur du locuteur en données binaires de la manière suivante :

   soit un locuteur représenté par un super-vecteur $V = (v_i)_{i=0,...LI-1}$, et
   $M = (m_i)_{i=0,...L-1}$ le super-vecteur moyen, le processeur exécute la binarisation $b = (b_j)_{j=0,...2L-1}$ à un bit significatif par coefficients suivante :

$$b_{2i}b_{2i+1} = \begin{cases} 00 \text{ si } v_i \leq m_i \\ \\ 10 \text{ sinon} \end{cases}$$

   dans le cas d'un centroïde dit léger et
   dans le cas d'un centroïde dit lourd
   soit $\sigma = (\sigma_i)_{i=0,...nc-1}$ la variance des différents coefficients calculée sur tous les centroïdes de tous les locuteurs, nombre_vecteur le nombre de vecteurs total extraits de la séquence vocale, et n un paramètre permettant d'équilibrer la suite binaire b,
   le processeur est adapté à exécuter la binarisation $b = (b_i)_{i=0,...2L-1}$ à deux bit significatifs par coefficients

suivante :

$$b_{2i}b_{2i+1} = \begin{cases} 00 \text{ si } & v_i \leq m_i - n * \sigma_{i \bmod (nc-1)} \\ 01 \text{ si } & m_i - n * \sigma_{i \bmod (k-1)} < v_i \leq m_i \\ 10 \text{ si } & m_i < v_i \leq m_i + n * \sigma_{i \bmod (nc-1)} \\ 11 \text{ sinon} \end{cases}$$

4. Procédé d'authentification audio d'un individu **caractérisé en ce qu'**il comporte en combinaison au moins les étapes suivantes :

○ élaborer un dictionnaire de référence représentatif d'un individu en utilisant les vecteurs cepstraux issus des séquences de parole de L locuteurs de référence par transformations successives hiérarchiques et en regroupant les vecteurs cepstraux afin d'établir par construction hiérarchique un dictionnaire de référence, le dictionnaire Dref se présentant sous la forme d'un ensemble de composantes correspondant aux vecteurs cepstraux ou super-vecteur et élaborer un super-vecteur moyen **M** en utilisant la moyenne par composantes des différents vecteurs constituant le super-vecteur moyen,

• élaborer pour chaque locuteur un dictionnaire Dloc en utilisant le dictionnaire Dref et en associant les vecteurs du dictionnaire du locuteur $Dl_{oc}$ et ceux du dictionnaire de référence Dref,
• capter un signal audio représentatif d'un locuteur à authentifier et extraire (51) des paramètres acoustiques à partir du signal audio,
• définir un super-vecteur moyen **M** (13) représentatif de la population à authentifier, associé à un modèle moyen,
• déterminer les clés publiques Kpub(l) des individus susceptibles d'être authentifiés par le procédé,

○ décomposer le signal audio reçu en vecteurs représentatifs du locuteur l à authentifier, transformer le super-vecteur V dudit locuteur l issu de la concaténation des vecteurs associés audit locuteur en données binaires 1001100 ....0 en prenant en entrée le super-vecteur moyen **M** issu du modèle moyen, et en comparant le super-vecteur du locuteur et le super-vecteur moyen,
○ lesdites données binaires ainsi obtenues étant transmises à un module d'extraction de l'authentification du locuteur prenant en entrée les clés publiques Kpub(l) afin d'authentifier le locuteur et/ou de générer une donnée cryptographique associée audit locuteur l.

5. Procédé selon la revendication 4 **caractérisé en ce que** ledit procédé capte des signaux de parole, et **en ce que** lesdits signaux de parole sont transformés en paramètres acoustiques, tels que des cepstres, des LSF, des formants.

6. Procédé selon la revendication 5 **caractérisé en ce que** les signaux de parole sont transformés en vecteurs cepstraux.

7. Procédé selon la revendication 6 **caractérisé en ce qu'**il comporte une étape de détermination des centroïdes associés aux vecteurs cepstraux (acoustiques) d'un locuteur l et à exécuter la transformation des centroïdes en données binaires en utilisant au moins un bit significatif, en exécutant les étapes suivantes :

• comparer le super-vecteur du locuteur $\mathbf{V} = (v_i)_{i=0,...L-1}$ avec le super-vecteur moyen $\mathbf{M} = (m_i)_{i=0,...L-1}$
• pondérer chaque centroïde ci en fonction du nombre de vecteurs extraits du signal de parole associé.

8. Procédé selon la revendication 7 **caractérisé en ce qu'**il comporte une étape transformant les coordonnées du super-vecteur **V** du locuteur en données binaires de la manière suivante :

soit un locuteur l représenté par un super-vecteur $\mathbf{V} = (v_i)_{i=0,...L-1}$ et $\mathbf{M} = (m_i)_{i=0,...LI-1}$ le super-vecteur moyen, le processeur exécute la binarisation $b = (b_j)_{j=0,...2LI-1}$ à un bit significatif par coefficients suivante :

$$b_{2i}b_{2i+1} = \begin{cases} 00 \text{ si } v_i \le m_i \\ \\ 10 \text{ sinon} \end{cases}$$

dans le cas d'un centroïde dit léger et
dans le cas d'un centroïde dit lourd

soit $\sigma = (\sigma_i)_{i=0,\dots nc-1}$ la variance des différents coefficients calculée sur tous les centroïdes de tous les locuteurs, nombre_vecteur le nombre de vecteurs total extraits de la séquence vocale, et n un paramètre permettant d'équilibrer la suite binaire b,
le processeur est adapté à exécuter la binarisation $b = (b_i)_{i=0,\dots 2l-1}$ à deux bits significatifs par coefficients suivante :

$$b_{2i}b_{2i+1} = \begin{cases} 00 \text{ si } & v_i \le m_i - n * \sigma_{i \bmod (nc-1)} \\ 01 \text{ si } & m_i - n * \sigma_{i \bmod (k-1)} < v_i \le m_i \\ 10 \text{ si } & m_i < v_i \le m_i + n * \sigma_{i \bmod (nc-1)} \\ 11 \text{ sinon} \end{cases}$$

## Patentansprüche

1. System zum Authentifizieren von Ton einer Person oder eines Sprechers I, **dadurch gekennzeichnet, dass** es in Kombination wenigstens die folgenden Elemente umfasst:

   • einen Sensor (10) für einen oder mehrere mit der Person assoziierte Tonparameter;
   • ein Modul (51) zum Extrahieren von akustischen Parametern aus dem Tonsignal;
   • ein mittleres Modell, das mit einem mittleren Super-Vektor M (13) assoziiert ist, der die zu authentifizierende Population repräsentiert;
   • eine Referenzdatenbank (11);
   • eine Datenbank (12), die die öffentlichen Schlüssel Kpub(I) der zu authentifizierenden Personen enthält;
   • einen Prozessor (14), ausgelegt zum:

      ∘ Erstellen eines Referenz-Dictionary, das eine Person repräsentiert, mit Hilfe der von den Sprachsequenzen von L Referenzlautsprechern stammenden Cepstral-Vektoren durch sukzessive hierarchische Transformationen und durch Gruppieren der Cepstral-Vektoren, um ein Referenz-Dictionary durch hierarchische Konstruktion zu erstellen, wobei das genannte Dictionary Dref in Form eines Satzes von Komponenten vorliegt, die den Cepstral-Vektoren oder dem Super-Vektor entsprechen, und Erstellen eines mittleren Super-Vektors mit Hilfe des Mittelwertes der Komponenten der verschiedenen Vektoren, die den mittleren Super-Vektor bilden;
      ∘ Erstellen eines Dictionary Dloc für jeden Sprecher mit Hilfe des Dictionary Dref;
      ∘ Zerlegen eines auf dem Sensor empfangenen Tonsignals in Vektoren, die den zu authentifizierenden Sprecher I repräsentieren, Umwandeln des von der Verkettung der mit dem Sprecher I assoziierten Vektoren stammenden Super-Vektors V des Sprechers I in binäre Daten 1001100....0, indem als Eingang der von dem mittleren Modell stammende mittlere Super-Vektor M genommen wird und der Super-Vektor V des Sprechers und der mittlere Super-Vektors M verglichen werden;
      ∘ wobei die so erhaltenen binären Daten zu einem Modul zum Extrahieren der Authentifikation des Sprechers gesendet werden, wobei als Eingang die öffentlichen Schlüssel Kpub(I) genommen werden, um den Sprecher zu authentifizieren und/oder ein kryptografisches Datenelement Ksec(I) zu erzeugen, das mit dem Sprecher I assoziiert ist;
      ∘ wobei das Tonsignal ein Sprachsignal ist, und dadurch, dass der Prozessor zum Umwandeln der Sprachsignale in Cepstral-Vektoren ausgelegt ist, und dadurch, dass

◦ der Prozessor zum Bestimmen der mit den Cepstral-Vektoren eines Sprechers assoziierten Zentroide und zum Ausführen der Umwandlung der Zentroide in binäre Daten mit Hilfe von wenigstens einem signifikanten Bit durch Ausführen der folgenden Schritte ausgelegt ist:

◦ Vergleichen des Super-Vektors des Sprechers $V = (V_i)_{i=0,...L-1}$ mit dem mittleren Super-Vektor $M = (m_i)_{i=0,...L-1}$;
◦ Gewichten jedes Zentroids $c_i$ in Abhängigkeit von der Anzahl von aus dem assoziierten Sprachsignal extrahierten Vektoren.

2. System nach Anspruch 1, **dadurch gekennzeichnet, dass** die Daten Sprachdaten sind, und dadurch, dass der Prozessor (14) zum Umwandeln der Sprachsignale in akustische Parameter wie Cepstrums, LSFs, Formanten ausgelegt ist.

3. System nach Anspruch 1, **dadurch gekennzeichnet, dass** der Prozessor (14) zum Umwandeln der Koordinaten des Super-Vektors des Sprechers in binäre Daten wie folgt ausgelegt ist:

es sei ein Sprecher repräsentiert durch einen Super-Vektor $V = (V_i)_{i=0,...LI-1}$ und $M = (m_i)_{i=0,...L-1}$ der mittlere Super-Vektor, wobei der Prozessor die Binarisierung $b = (b_j)_{j=0,....2L-1}$ mit einem signifikanten Bit mit Hilfe der folgenden Koeffizienten ausführt:

$$b_{2i}b_{2i+1} = \begin{cases} 00 \text{ falls } v_i \leq m_i \\ \\ 10 \text{ andernfalls} \end{cases}$$

im Falle eines als leicht bezeichneten Zentroids und
im Falle eines als schwer bezeichneten Zentroids

sei $\sigma = (\sigma_i)_{i=0,...nc-1}$ die Varianz der verschiedenen Koeffizienten, berechnet an allen Zentroiden aller Sprecher, vector_number sei die Anzahl von Gesamtvektoren, extrahiert aus der vokalen Sequenz, und n sei ein Parameter, der das Ausgleichen des binären Satzes b zulässt,
wobei der Prozessor ausgelegt ist zum Ausführen der Binarisierung $b = (b_i)_{i=0,...2L-1}$ mit zwei signifikanten Bits mit Hilfe der folgenden Koeffizienten:

$$b_{2i}b_{2i+1} = \begin{cases} 00 \text{ falls } v_i \leq m_i - n * \sigma_{i \bmod (nc-1)} \\ 01 \text{ falls } m_i - n * \sigma_{i \bmod (k-1)} < v_i \leq m_i \\ 10 \text{ falls } m_i < v_i \leq m_i + n * \sigma_{i \bmod (nc-1)} \\ 11 \text{ andernfalls} \end{cases}$$

4. Verfahren zum Authentifizieren von Ton einer Person, **dadurch gekennzeichnet, dass** es in Kombination wenigstens die folgenden Schritte beinhaltet:

◦ Erstellen eines Referenz-Dictionary, das eine Person repräsentiert, mit Hilfe der von Sprachsequenzen von L Referenzsprechern stammenden Cepstral-Vektoren durch sukzessive hierarchische Transformationen und durch Gruppieren der Cepstral-Vektoren, um ein Referenz-Dictionary durch hierarchische Konstruktion zu erstellen, wobei das Dictionary Dref in Form eines Satzes von Komponenten vorliegt, die den Cepstral-Vektoren oder dem Super-Vektor entsprechen, und Erstellen eines mittleren Supervektors M mit Hilfe des Mittelwertes der Komponenten der verschiedenen Vektoren, die den mittleren Super-Vektor bilden;

• Erstellen eines Dictionary Dloc für jeden Sprecher durch Verwenden des Dictionary Dref und durch Assoziieren der Vektoren des Dictionary des Sprechers $DI_{OC}$ und derer des Referenz-Dictionary Dref;
• Erkennen eines Tonsignals, das einen zu authentifizierenden Sprecher repräsentiert, und Extrahieren (51) von akustischen Parametern aus dem Tonsignal;
• Definieren eines mittleren Super-Vektors M (13), der die zu authentifizierende Population repräsentiert, assoziiert mit einem mittleren Modell;
• Ermitteln der öffentlichen Schlüssel Kpub(I) der Personen, die mit dem Verfahren authentifiziert werden können,

∘ Zerlegen des empfangenen Tonsignals in Vektoren, die den zu authentifizierenden Sprecher I repräsentieren, Umwandeln des von der Verkettung der mit dem Sprecher assoziierten Vektoren stammenden Super-Vektors V des Sprechers I in binäre Daten 1001100....0, indem als Eingang der mittlere Super-Vektor M genommen wird, der von dem mittleren Modell stammt, und durch Vergleichen des Super-Vektors des Sprechers und des mittleren Super-Vektors;
∘ wobei die so erhaltenen binären Daten zu einem Modul zum Extrahieren der Authentifikation des Sprechers gesendet werden, wobei als Eingang die öffentlichen Schlüssel Kpub(I) genommen werden, um den Sprecher zu authentifizieren und/oder ein kryptografisches Datenelement zu erzeugen, das mit dem Sprecher I assoziiert ist.

5. Verfahren nach Anspruch 4, **dadurch gekennzeichnet, dass** das Verfahren Sprachsignale erkennt, und dadurch, dass die Sprachsignale in akustische Parameter wie Cepstrums, LSFs, Formanten umgewandelt werden.

6. Verfahren nach Anspruch 5, **dadurch gekennzeichnet, dass** die Sprachsignale in Cepstral-Vektoren umgewandelt werden.

7. Verfahren nach Anspruch 6, **dadurch gekennzeichnet, dass** es einen Schritt des Ermittelns von mit den Cepstral-(akustischen)-Vektoren eines Sprechers I assoziierten Zentroiden und des Ausführens der Umwandlung der Zentroide in binäre Daten mit Hilfe von wenigstens einem signifikanten Bit durch Ausführen der folgenden Schritte beinhaltet:

• Vergleichen des Super-Vektors des Sprechers V = $(V_i)_{i=0,...L-1}$ mit dem mittleren Super-Vektor M = $(m_i)_{i=0,...L-1}$;
• Gewichten jedes Zentroids ci in Abhängigkeit von der Anzahl von aus dem assoziierten Sprachsignal extrahierten Vektoren.

8. Verfahren nach Anspruch 7, **dadurch gekennzeichnet, dass** es einen Schritt des Umwandeins der Koordinaten des Super-Vektors V des Sprechers in binäre Daten wie folgt beinhaltet:

es sei ein Sprecher repräsentiert durch einen Super-Vektor V = $(V_i)_{i=0,...LI-1}$ und M = $(m_i)_{i=0,...L-1}$ der mittlere Super-Vektor, wobei der Prozessor die Binarisierung b = $(b_j)_{j=0,...2L-1}$ mit einem signifikanten Bit mit Hilfe der folgenden Koeffizienten ausführt:

$$b_{2i}b_{2i+1} = \begin{cases} 00 & \text{falls } v_i \leq m_i \\ 10 & \text{andernfalls} \end{cases}$$

im Falle eines als leicht bezeichneten Zentroids und
im Falle eines als schwer bezeichneten Zentroids

sei $\sigma = (\sigma_i)_{i=0,...nc-1}$ die Varianz der verschiedenen Koeffizienten, berechnet an allen Zentroiden aller Sprecher, vector_number sei die Anzahl von aus der vokalen Sequenz extrahierten Gesamtvektoren und n sei ein Parameter, der den Ausgleich des binären Satzes b zulässt,
wobei der Prozessor ausgelegt ist zum Ausführen der Binarisierung b = $(b_i)_{i=0,...2L-1}$ mit zwei signifikanten Bits mit Hilfe der folgenden Koeffizienten:

$$b_{2i}b_{2i+1} = \begin{cases} 00 \text{ falls } & v_i \leq m_i - n * \sigma_{i \bmod (nc-1)} \\ 01 \text{ falls } & m_i - n * \sigma_{i \bmod (k-1)} < v_i \leq m_i \\ 10 \text{ falls } & m_i < v_i \leq m_i + n * \sigma_{i \bmod (nc-1)} \\ 11 \text{ andernfalls} \end{cases} .$$

## Claims

1. A system for authenticating audio of an individual or speaker I, **characterised in that** it comprises at least the following elements in combination:

   • a sensor (10) for one or more audio parameters associated with said individual;
   • a module (51) for extracting acoustic parameters from the audio signal;
   • a mean model associated with a mean super-vector M (13) representing the population to be authenticated;
   • a reference database (11);
   • a database (12) containing the public keys Kpub(I) of the individuals to be authenticated;
   • a processor (14) adapted to:

      ∘ develop a reference dictionary representing an individual by using the cepstral vectors originating from the speech sequences of L reference speakers by successive hierarchical transforms and by grouping the cepstral vectors so as to establish a reference dictionary by hierarchical construction, said dictionary Dref being in the form of a set of components corresponding to the cepstral vectors or to the super-vector and to develop a mean super-vector by using the mean of components of the various vectors forming the mean super-vector;
      ∘ develop a dictionary Dloc for each speaker using the dictionary Dref;
      ∘ decomposing an audio signal received on said sensor into vectors representing the speaker I to be authenticated, converting the super-vector V of said speaker I coming from the concatenation of the vectors associated with said speaker I into binary data 1001100....0 by taking as input the mean super-vector M coming from the mean model and by comparing the super-vector V of the speaker and the mean super-vector M;
      ∘ said binary data that is thus obtained being transmitted to a module for extracting the authentication of the speaker taking as input the public keys Kpub(I) so as to authenticate the speaker and/or to generate an item of cryptographic data Ksec(I) associated with said speaker I;
      ∘ said audio signal is a speech signal and **in that** said processor is adapted to convert said speech signals into cepstral vectors, and **in that**
      ∘ said processor is adapted to determine the centroids associated with the cepstral vectors of a speaker and to execute the conversion of the centroids into binary data using at least one significant bit by executing the following steps:

         ∘ comparing the super-vector of the speaker $V = (V_i)_{i=0,...L-1}$ to the mean super-vector $M = (m_i)_{i=0,...L-1}$;
         ∘ weighting each centroid $c_i$ as a function of the number of vectors extracted from the associated speech signal.

2. The system according to claim 1, **characterised in that** the data is speech signals, and **in that** said processor (14) is adapted to convert said speech signals into acoustic parameters, such as cepstrums, LSFs, formants.

3. The system according to claim 1, **characterised in that** said processor (14) is adapted to convert the coordinates of the super-vector of the speaker into binary data as follows:

   let a speaker be represented by a super-vector $V = (V_i)_{i=0,...LI-1}$, and $M = (m_i)_{i=0,...L-1}$ be the mean super-vector, said processor executes the binarisation $b = (b_j)_{j=0,...2L-1}$ with a significant bit using the following coefficients:

$$b_{2i}b_{2i+1} = \begin{cases} 00 \text{ if } v_i \leq m_i \\ \\ 10 \text{ otherwise} \end{cases}$$

in the case of a centroid called light centroid and
in the case of a centroid called heavy centroid

let $\sigma = (\sigma_i)_{i=0,...nc-1}$ be the variance of the various coefficients computed on all of the centroids of all of the speakers, vector_number be the number of total vectors extracted from the vocal sequence and n be a parameter allowing the binary set b to be balanced,
said processor is adapted to execute the binarisation b = $(b_i)_{i=0,...2L-1}$ at two significant bits using the following coefficients:

$$b_{2i}b_{2i+1} = \begin{cases} 00 \text{ if } v_i \leq m_i - n * \sigma_{i \bmod (nc-1)} \\ 01 \text{ if } m_i - n * \sigma_{i \bmod (k-1)} < v_i \leq m_i \\ 10 \text{ if } m_i < v_i \leq m_i + n * \sigma_{i \bmod (nc-1)} \\ 11 \text{ otherwise} \end{cases}$$

4. A method for authenticating the audio of an individual, **characterised in that** it comprises at least the following steps in combination:

   ◦ developing a reference dictionary representing an individual by using the cepstral vectors originating from the speech sequences of L reference speakers by successive hierarchical transforms and by grouping the cepstral vectors so as to establish a reference dictionary by hierarchical construction, said dictionary Dref being in the form of a set of components corresponding to the cepstral vectors or to the super-vector and developing a mean super-vector M by using the mean of components of the various vectors forming the mean super-vector;

   • developing a dictionary Dloc for each speaker by using the dictionary Dref and by associating the vectors of the dictionary of the speaker $DI_{oc}$ and those of the reference dictionary Dref;
   • detecting an audio signal representing a speaker to be authenticated and extracting (51) acoustic parameters from said audio signal;
   • defining a mean super-vector M (13) representing the population to be authenticated, associated with a mean model;
   • determining the public keys Kpub(I) of the individuals likely to be authenticated by said method,

   ◦ decomposing the received audio signal into vectors representing the speaker I to be authenticated, converting the super-vector V of said speaker I coming from the concatenation of the vectors associated with said speaker into binary data 1001100....0 by taking as input the mean super-vector M coming from the mean model and by comparing the super-vector of the speaker and the mean super-vector;
   ◦ said binary data that is thus obtained being transmitted to a module for extracting the authentication of the speaker taking as input the public keys Kpub(I) so as to authenticate the speaker and/or to generate an item of cryptographic data associated with said speaker I.

5. The method according to claim 4, **characterised in that** said method detects speech signals, and **in that** said speech signals are converted into acoustic parameters, such as cepstrums, LSFs, formants.

6. The method according to claim 5, **characterised in that** said speech signals are converted into cepstral vectors.

7. The method according to claim 6, **characterised in that** it comprises a step of determining centroids associated with the cepstral (acoustic) vectors of a speaker I and of executing the conversion of the centroids into binary data by using at least one significant bit, by executing the following steps:

- comparing the super-vector of the speaker $V = (V_i)_{i=0,...L-1}$ to the mean super-vector $M = (m_i)_{i=0,...L-1}$;
- weighting each centroid $c_i$ as a function of the number of vectors extracted from the associated speech signal.

8. The method according to claim 7, **characterised in that** it comprises a step of converting the coordinates of the super-vector V of the speaker into binary data as follows:

let a speaker I represented by a super-vector $V = (V_i)_{i=0,...LI-1}$, and $M = (m_i)_{i=0,...L-1}$ be the mean super-vector, said processor executes the binarisation $b = (b_j)_{j=0,...2L-1}$ with a significant bit using the following coefficients:

$$b_{2i}b_{2i+1} = \begin{cases} 00 & \text{if } v_i \leq m_i \\ \\ 10 & \text{otherwise} \end{cases}$$

in the case of a centroid called light centroid and
in the case of a centroid called heavy centroid,

let $\sigma = (\sigma_i)_{i=0,...nc-1}$ be the variance of the various coefficients computed on all of the centroids of all of the speakers, vector_number be the number of total vectors extracted from the vocal sequence and n be a parameter allowing the binary set b to be balanced,
said processor is adapted to execute the binarisation $b = (b_i)_{i=0,...2L-1}$ at two significant bits using the following coefficients:

$$b_{2i}b_{2i+1} = \begin{cases} 00 & \text{if } v_i \leq m_i - n * \sigma_{i \bmod (nc-1)} \\ 01 & \text{if } m_i - n * \sigma_{i \bmod (k-1)} < v_i \leq m_i \\ 10 & \text{if } m_i < v_i \leq m_i + n * \sigma_{i \bmod (nc-1)} \\ 11 & \text{otherwise} \end{cases}$$

FIG.1

*Séquences
Locuteur n°1*

*Séquences
Locuteur n°k*

*Séquences
Locuteur n°L*

| Détection Activité Vocale | Détection Activité Vocale | Détection Activité Vocale 30 |

| Analyse Cepstrale | ⋯⋯ | Analyse Cepstrale | ⋯⋯ | Analyse Cepstrale 31 |

$\{x_1(n)\}_{n=1,N_1}$         $\{x_k(n)\}_{n=1,N_k}$         $\{x_L(n)\}_{n=1,N_L}$

| Regroupement des vecteurs cepstraux 32 |

$\{x(n)\}_{n=1,N}$ avec $N = N_1 + \ldots + N_L$

| Construction hiérarchique du dictionnaire 33 |

$\{c_{ref}^{nc}(p)\}_{p=1,nc}$ pour $nc = 1, \ldots, N_c$

Construction du dictionnaire de référence

# FIG.2

*Séquences
Locuteur Test*

$$\downarrow$$

| Détection Activité Vocale | 40 |

$$\downarrow$$

| Analyse Cepstrale | 41 |

$$\downarrow$$

$$\{x_{test}(m)\}_{m=1,M}$$

$$\downarrow$$

$$\{c_{ref}^{nc}(p)\}_{p=1,k} \text{ pour } nc = 1, ..., N_c$$

33

$$\downarrow$$

| Construction du dictionnaire par alignement | 42 |

$$\downarrow$$

$$\{c_{test}^{nc}(p)\}_{p=1,k} \text{ pour } nc = 1, ..., N_c$$

*Dictionnaire du
locuteur Test*

Construction du dictionnaire associé à un locuteur

# FIG.3

CENTROIDE

«Léger»

«Lourd»

1 bit
représentatif par
coefficients

2 bits
représentatifs par
coefficients

# FIG.4A

$C_i = 00$  |  $C_i = 10$

$m_i$

# FIG.4B

$C_i = 00$ | $C_i = 01$ | $C_i = 11$ | $C_i = 10$

$m_i - \alpha\sigma_i$  $m_i$  $m_i + \alpha\sigma_i$

# FIG.4C

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Parameter Optimization in a Text-Dependent Cryptographic-speech-Key-Generation Task. **PAOLA GARCIA-PERRERA L et al.** Nonlinear Analyses and algorithms for Speech Processing Lecture Notes in computer Science. Springer, 01 Janvier 2006, 92-99
- **MONROSE.** concerne une technique pour générer de manière fiable une clé de cryptographie pour une voix d'utilisateur. Les clés sont suffisamment robustes contre des attaques. *Cryptographic Key Generation from Voice*
- **PAOLA GARCIA-PERERA.** divulgue un procédé permettant de générer des clés en optimisant le nombre de paramètres. *Parameter Optimization in a Text-Dependent Cryptographic-Speech-Key-Generation Task*
- Fuzzy extractors : how to generate strong keys from biometrics and other noisy data. **Y. DODIS ; L. REZIN ; A SMITH.** Eurocrypt 2004 LNCS 3027. Springer-Verlag, 2004, 79-100
- **Y. DODIS ; R. OSTROVSKI ; L. REZIN ; A SMITH.** *SIAM Journal of computing,* 2008, vol. 38 (1), 97-139
- unserpervised speaker adaptation based on hierarchical spectral clustering. *IEEE Transations on acoustics, speech and signal processing,* Décembre 1989, vol. 37 (12